# EUROPEAN PATENT SPECIFICATION

(11) **EP 4 089 349 B1**
(45) Date of publication and mention of the grant of the patent: **07.08.2024**
(21) Application number: 21207398.5
(22) Date of filing: 10.11.2021
(51) Int. Cl.: F25B 49/02

(54) **AIR CONDITIONER AND CONTROL METHOD THEREOF**
KLIMAANLAGE UND STEUERUNGSVERFAHREN DAFÜR
CLIMATISEUR ET SON PROCÉDÉ DE FONCTIONNEMENT

(30) Priority: 14.05.2021 KR 20210062721
(43) Date of publication of application: 16.11.2022
(73) Proprietor: LG Electronics Inc., Seoul 07336 (KR)
(72) Inventor: KWAK, Min Suk, 08592 Seoul (KR); LEE, Hyun-Kyung, 08592 Seoul (KR)
(74) Representative: Ter Meer Steinmeister & Partner

(56) References cited:
- EP-A1- 2 320 159
- US-A1- 2015 354 878

## Description

### TECHNICAL FIELD

Disclosed herein are an air conditioner operating in an injection cycle and a control method thereof.

### BACKGROUND

Air conditioners are devices that perform compression, condensation, expansion and evaporation procedures to cool or heat an indoor space.

An ordinary air conditioner includes a compressor, a condenser, an expansion valve and an evaporator. Refrigerants compressed in the compressor are condensed in the condenser, and the condensed refrigerants are expanded in the expansion valve. The expanded refrigerants are evaporated in the evaporator and then flow into the compressor. That is, the air conditioner operates in a cooling cycle where refrigerants are compressed, condensed, expanded and evaporated.

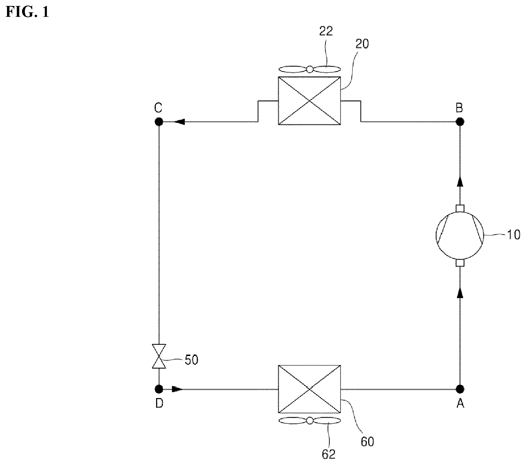

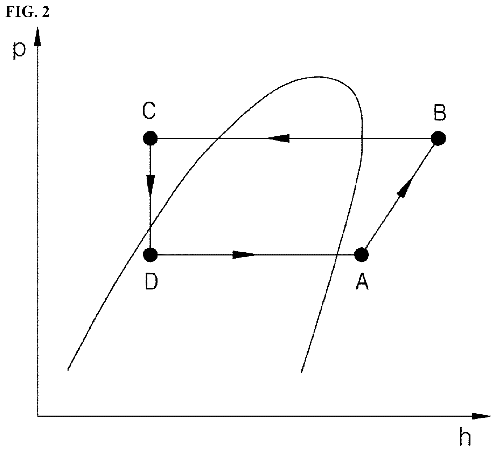

FIG.1 is a block diagram showing a configuration of an ordinary air conditioner. FIG. 2 is a pressure-entropy (PH) diagram corresponding to a state of refrigerants of the air conditioner in FIG. 1.

Reference numerals in FIGS. 1 and 2 are limited to components in FIGS. 1 and 2.

Referring to FIG. 1, the air conditioner includes a compressor 10, a condenser 20, an expansion valve 50 and an evaporator 60, and performs cooling and heating operations.

During the heating operation, an indoor heat exchanger of the air conditioner serves as a condenser 20, and an outdoor heat exchanger of the air conditioner serves as an evaporator 60. During the cooling operation, the indoor heat exchanger of the air conditioner serves as an evaporator 60, and the outdoor heat exchanger of the air conditioner serves as a condenser 20.

The heating operation of the air conditioner is described as follows with reference to FIG. 2.

Refrigerants are compressed in the compressor 10. That is, as a result of driving of the compressor 10, heat is applied to refrigerants, and low-pressure low-temperature gaseous refrigerants are changed into high-pressure high-temperature gaseous refrigerants. Accordingly, the pressure and enthalpy of the refrigerants increase (A-B section).

The heat of the refrigerants dissipates in the condenser 20. That is, the high-pressure high-temperature gaseous refrigerants are changed to high-pressure middle-low temperature liquid refrigerants (i.e., a phase transition). Accordingly, the pressure of the refrigerants is maintained, and as a result of the phase transition between gas and liquid, the enthalpy of the refrigerants decreases (B-C section).

The refrigerants are throttled in the expansion valve 50. That is, the high-pressure middle-low temperature liquid refrigerants are changed to low-pressure low-temperature liquid refrigerants. Accordingly, the enthalpy of the refrigerants is maintained, and the pressure and temperature of the refrigerants decrease (C-D section).

The heat of the refrigerants is absorbed (evaporated) in the evaporator 60. That is, the low-pressure low-temperature liquid refrigerants are changed to low- pressure low-temperature gaseous refrigerants. Accordingly, the pressure of the refrigerants is maintained and the enthalpy of the refrigerants increases (D-A section).

As a result of repetition of the above procedures, the air conditioner operates in the cooling cycle while refrigerants circulate.

To improve heating performance, the air conditioner operates in an injection cycle where gaseous refrigerants are injected into the compressor.

The air conditioner using the injection cycle may further include an injection expansion valve and an inner heat exchanger. Specifically, a pipe connecting the indoor heat exchanger and the outdoor heat exchanger is branched, and the branched pipe connects to an injection port disposed at the compressor. The injection expansion valve configured to expand refrigerants is installed in the branched pipe, and the inner heat exchanger allows of heat exchange of refrigerants expanded by the injection expansion valve. Gaseous refrigerants, reduced in pressure, expanded, and overheated, are injected into the compressor through the injection port. Based on the injection cycle, compression performance of the compressor improves, and an amount of circulating refrigerants increases. Thus, cooling performance and heating performance of the air conditioner improve.

For the air conditioner to operate in the injection cycle, the injection expansion valve is opened. However, under specific circumstances (e.g., circumstances with high temperature of inlet water and a low outdoor temperature), a sufficient amount of refrigerants may not flow in the injection expansion valve open. In this case, a temperature of refrigerants discharged from the compressor do not decrease, and the air conditioner is repeatedly turned off and then turned on.

### [Prior Art Document]

### [Patent Document]

(Document 1) KR Patent Publication No.10-2011-0062457 (2011.06.10)
(Document 2) KR Patent Publication No. 10-2017-0087364 (2019.01.18)
(Document 3) CN Patent No.103411291 (2016.03.09).

US 2015/354878 A1 presents an air-conditioning apparatus that includes: a first bypass pipe connected to an inlet-side passage of an accumulator through a second expansion device, a second passage of a subcooling heat exchanger, and a first opening and closing device; a second bypass pipe branched from the first bypass pipe between the subcooling heat exchanger and the first opening and closing device and connected to an injection port of a compressor through a second opening and closing device; and a third bypass pipe branched from a refrigerant pipe between a heat source-side heat exchanger and a use-side heat exchanger and connected to the second bypass pipe between the second opening and closing device and the injection port of the compressor through a third expansion device.

EP 2 320 159 A1 presents a refrigerating apparatus having a plurality of compressors, and including an injection circuit which includes a first injection pipe branched from a first refrigerant pipe of a refrigerant circuit and branch injection pipes branched from the first injection pipe, a subcooling pressure-reducing valve provided to the first injection pipe, and flow rate adjusting valves provided to the branch injection pipes, respectively.

### SUMMARY

The present disclosure is directed to an air conditioner and a control method thereof that may ensure an adequate flow rate of branch refrigerants flowing through an injection flow path, in an injection cycle.

The present disclosure is also directed to an air conditioner and a control method thereof that may prevent superheating of refrigerants discharged from a compressor, in an injection cycle.

The present disclosure is also directed to an air conditioner and a control method thereof that may prevent an operational error, in an injection cycle.

The present disclosure is also directed to an air conditioner and a control method thereof that may drive a compressor reliably as a result of adjustment of an operation frequency of the compressor, before an injection cycle.

Aspects are not limited to the above ones, and other aspects and advantages that are not mentioned above can be clearly understood from the following description and can be more clearly understood from the embodiments set forth herein.

### Technical Solution

One or more of the above objects are achieved by the invention set out by the subject-matter of the independent claims.

An air conditioner and a control method thereof in one embodiment may ensure an adequate flow rate of branch refrigerants flowing through an injection flow path, in an injection cycle, as a result of adjustment of at least one of an operation frequency of a compressor and an opening degree of a main expansion valve.

The air conditioner and the control method thereof in one embodiment may adjust the operation frequency of the compressor based on an injection superheating degree, and adjust the opening degree of the main expansion valve based on a supercooling degree of refrigerants.

The air conditioner and the control method thereof according to the invention decreases the operation frequency of the compressor to a predetermined operation frequency, before the injection cycle, to drive the compressor reliably.

In a first aspect of the present technique an air conditioner is presented. The air conditioner includes a compressor; a condenser; an evaporator; a main expansion valve configured to receive refrigerant discharged from the condenser and to discharge the refrigerant towards the evaporator; an injection flow path configured to branch off a part of the refrigerant discharged from the main expansion valve, towards the compressor, as branched refrigerant; an injection expansion valve installed in the injection flow path and configured to receive and expand the branched refrigerant; an inner heat exchanger and a controller e.g. a micom or a processor.

The inner heat exchanger is configured to receive the branched refrigerant discharged from the injection expansion valve, and to receive a main refrigerant, bypassing the injection expansion valve, of the refrigerant discharged from the main expansion valve. The inner heat exchanger is configured to allow or perform heat exchange between the branched refrigerant and the main refrigerant.

The controller is configured to control the compressor, the main expansion valve and the injection expansion valve. The controller is configured to open the injection expansion valve, in an injection cycle of the air conditioner. The controller is further configured to adjust, in the injection cycle of the air conditioner, an operation frequency of the compressor and/or an opening degree of the main expansion valve, based on state information of the branched refrigerant flowing in or into the injection flow path and/or through or out of the injection expansion valve.

The controller may be configured to adjust the operation frequency of the compressor and/or the opening degree of the main expansion valve, based on state information of the branched refrigerant discharged from the injection expansion valve.

The controller may be configured to adjust the operation frequency of the compressor and/or the opening degree of the main expansion valve, based on state information of the branched refrigerant discharged from the injection expansion valve (for example upstream of the inner heat exchanger) and discharged from the inner heat exchanger.

In a second aspect of the present technique an air conditioner is provided. The air conditioner, including a compressor, a condenser and an evaporator and operating in an injection cycle, may include a main expansion valve configured to throttle refrigerants discharged from the condenser, an injection flow path configured to supply branch refrigerants of refrigerants discharged from the main expansion valve to the compressor, an injection expansion valve installed in the injection flow path and configured to throttle the branch refrigerants, an inner heat exchanger allowing of heat exchange between branch refrigerants discharged from the injection expansion valve and main refrigerants of refrigerants discharged from the main expansion valve, and a controller, also referred to as processor or micom, configured to control the compressor, the main expansion valve and the injection expansion valve. In the injection cycle, the micom may open the injection expansion valve, and based on state information of branch refrigerants flowing to the injection flow path through the injection expansion valve, may adjust at least one of an operation frequency of the compressor and an opening degree of the main expansion valve.

Further, in third aspect of the present technique a control method for an air conditioner is presented, for example a control method of or for an air conditioner according to any of the aforementioned aspects. The air conditioner includes a compressor, a condenser, a main expansion valve, an injection flow path, an injection expansion valve or device installed in the injection flow path, an inner heat exchanger, an evaporator and a micom, and is configured to operate in an injection cycle. The control method may include opening the injection expansion device, and adjusting at least one of an operation frequency of the compressor and an opening degree of the main expansion valve based on state information of branch refrigerants flowing to the injection flow path through the injection expansion valve or device open.

The air conditioner of any one of the aforementioned first aspect or the aforementioned second aspect, and control method of the aforementioned third aspect, may include one or more of the following features.

The state information of branch refrigerants may comprise an superheating degree of branch refrigerants flowing to the injection flow path.

Adjusting at least one of an operation frequency of the compressor and an opening degree of the main expansion valve may comprise increasing the operation frequency of the compressor in proportion to the superheating degree of branch refrigerants when the superheating degree of branch refrigerants exceeds a predetermined reference superheating degree.

The state information of branch refrigerants may comprise an superheating degree of branch refrigerants flowing to the injection flow path.

Adjusting at least one of an operation frequency of the compressor and an opening degree of the main expansion valve may comprise decreasing an opening degree of the main expansion valve in proportion to a supercooling degree of refrigerants discharged from the condenser when the superheating degree of branch refrigerants exceeds a predetermined reference superheating degree.

The state information of branch refrigerants may comprise an superheating degree of branch refrigerants flowing to the injection flow path.

The superheating degree of branch refrigerants may correspond to a difference between a temperature of branch refrigerants discharged from the inner heat exchanger and a temperature of branch refrigerants flowing into the inner heat exchanger.

Based on the superheating degree of branch refrigerants being greater than a predetermined reference superheating degree, the micom may increase the operation frequency of the compressor.

The micom may increase the operation frequency of the compressor in proportion to the superheating degree of branch refrigerants.

When the superheating degree of branch refrigerants is greater than a predetermined reference superheating degree, the micom may decrease the opening degree of the main expansion valve.

The micom may decrease the opening degree of the main expansion valve in proportion to a supercooling degree of refrigerants discharged from the condenser.

The supercooling degree of refrigerants may correspond to a difference between a temperature of refrigerants flowing into the condenser and a temperature of refrigerants discharged from the condenser.

The state information of branch refrigerants may comprise a flow rate of branch refrigerants flowing to the injection flow path.

Optionally, the flow rate may be measured or determined by a flow rate sensor.

The micom compares current of the compressor with first predetermined current before the injection expansion valve is open.

When the current of the compressor is greater than the first current, the micom decreases the operation frequency of the compressor.

The micom may decrease the operation frequency of the compressor until the current of the compressor is the same as or less than the first current.

The micom may compare an operation frequency of the compressor with a first predetermined operation frequency before the injection expansion valve is open. Optionally, when the operation frequency of the compressor is greater than the first operation frequency, the micom may decrease the operation frequency of the compressor.

### Advantageous Effect

An air conditioner according to the present disclosure may ensure an adequate flow rate of branch refrigerants flowing to an injection flow path, in an injection cycle, as a result of adjustment of an operation frequency of a compressor and an opening degree of a main expansion valve. Thus, refrigerants discharged from the compressor may be prevented from superheating. Further, as a result of control over temperature of the refrigerants discharged from the compressor, an operational error of the air conditioner may be prevented.

The air conditioner according to the present invention adjusts the operation frequency of the compressor before the injection cycle starts. That is, when the operation frequency of the compressor is too high before the injection cycle starts, the air conditioner controls the compressor such that the operation frequency of the compressor decreases to a first predetermined operation frequency or less. Thus, the compressor may be drive reliably.

Effects are not limited to the effects mentioned above and are construed as including all the effects that can be inferred from the configurations described in the detailed description or claims.

### BRIEF DESCRIPTION OF DRAWING

FIG. 1 is a block diagram showing a configuration of an ordinary air conditioner.
FIG. 2 is a pressure-entropy (PH) diagram corresponding to a state of refrigerants of the air conditioner in FIG. 1.
FIG. 3 is a view schematically showing a shape of an air conditioner using an injection cycle in one embodiment.
FIG. 4 is a view schematically showing a shape of an outdoor unit of the air conditioner in FIG. 3.
FIG. 5 is a block diagram showing the outdoor unit in FIG. 4.
FIG. 6 is a pressure-entropy (PH) diagram corresponding to a state of refrigerants of the air conditioner in FIG. 3.
FIG. 7 is a flow chart showing a control method of an air conditioner in one embodiment.

### DETAILED DESCRIPTION

Throughout the disclosure, the singular forms "a", "an" and "the" are intended to include the plural forms as well, unless explicitly indicated otherwise. It should be further understood that the terms "comprise" or "have" and the like, set forth herein, are not interpreted as necessarily including all the stated components or steps but can be interpreted as excluding some of the stated components or steps or can be interpreted as including additional components or steps. The terms "portion", "module", and the like set forth in the disclosure mean a unit for processing at least one function or operation, and can be realized as hardware or software, or a combination of hardware and software

Hereunder, various embodiments according to the present disclosure are described with reference to the accompanying drawings.

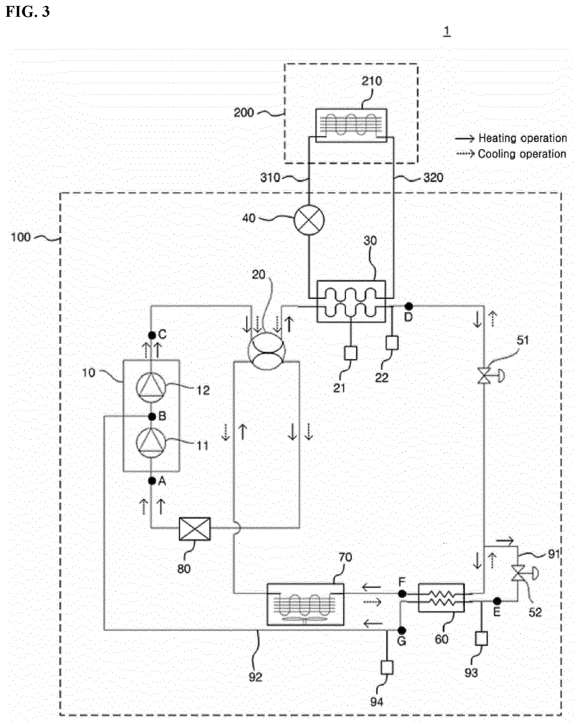

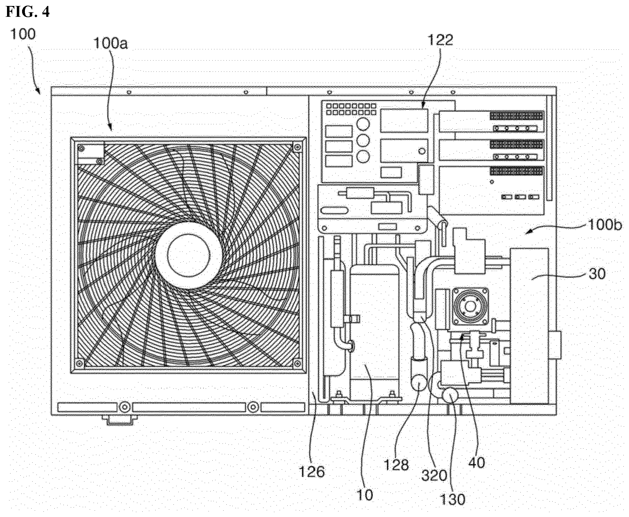

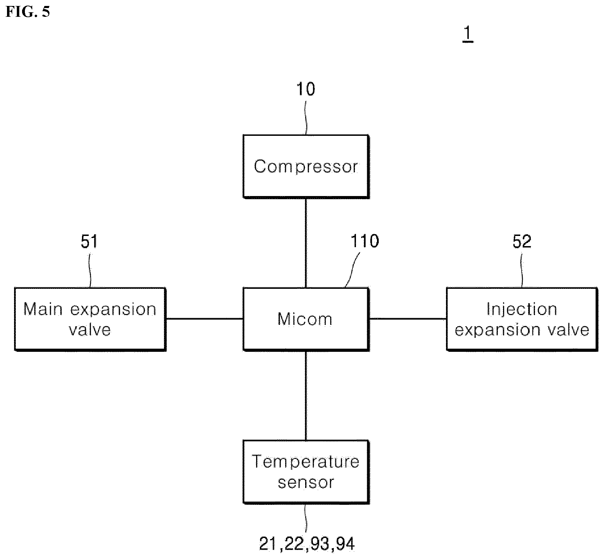

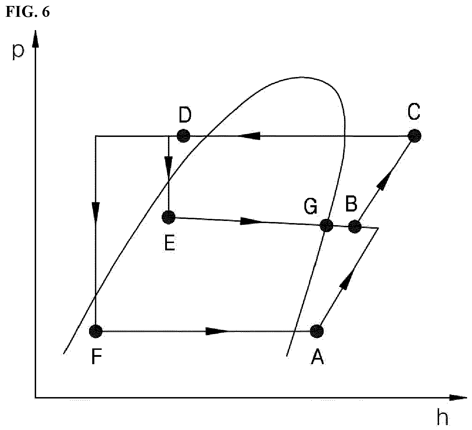

FIG. 3 is a view schematically showing a shape of an air conditioner using an injection cycle in one embodiment. FIG. 4 is a view schematically showing a shape of an outdoor unit of the air conditioner in FIG. 3. FIG. 5 is a block diagram showing the outdoor unit in FIG. 4. FIG. 6 is a pressure-entropy (PH) diagram corresponding to a state of refrigerants of the air conditioner in FIG. 3.

Referring to FIGS. 3 to 6, the air conditioner 1 in one embodiment may operate in a refrigeration cycle in which refrigerants circulate. The air conditioner 1 may perform a cooling operation or a heating operation based on a direction in which refrigerants circulate.

Referring to FIGS. 3 to 5, the air conditioner 1 may be an air to water heat pump (AWHP) air conditioner but not limited. The air conditioner according to the disclosure may be applied to other heat pump-air conditioner.

The air conditioner 1 may include an outdoor unit 100 and an indoor unit 200. The outdoor unit 100 and the indoor unit 200 may connect to a water pipe 320.

The outdoor unit 100 may include a compressor 10 that compresses refrigerants, a first outdoor heat exchanger 30 that allows of heat exchange between refrigerants and water, and a second outdoor heat exchanger 70 that allows of heat exchange between refrigerants and air. The outdoor unit 100 may include a pump 40 that allows water to flow, a four-way valve 20 that delivers refrigerants, discharged from the compressor 10, to the first outdoor heat exchanger 30 or the second outdoor heat exchanger 70, an accumulator 80 that supplies gas-phase refrigerants to the compressor 10, and an outdoor control box 122 provided with a micom 110 configured to control operation of the compressor 10.

The indoor unit 200 may include a circulation flow path 310 through which water, allowed to flow by the pump 40, flows, an indoor heat exchanger 210 that allows of heat exchanger between the water output from the pump 40 and air, and a storage tank (not illustrated) configured to store the water allowed to flow by the pump 40.

Referring to FIG. 4, the pump 40 may be disposed between the compressor 10 and the second outdoor heat exchanger 70. An outflow pipe 130 through which water being discharged from the outdoor unit 100 flows, and an inflow pipe 128 through which water being introduced from the indoor unit 200 flows may be disposed below the pump 40. The water pipe 320 extending from the outflow pipe 130 or the inflow pipe 128 to an inside of the outdoor unit 100 may be disposed around the pump 40.

Referring to FIG. 4, the outdoor unit 100 may further include an outdoor unit fan 124 forming an air flow to the second outdoor heat exchanger 70, and a partition plate 126 partitioning an area in which the outdoor unit fan 124 is disposed from an area in which the compressor 10 is disposed. Additionally, the inside of the outdoor unit 100 may be partitioned into a heat exchange room 100a in which the outdoor unit fan 124 and the second outdoor heat exchanger 70 are disposed, and a mechanical room 100b in which the compressor 10 and the pump 40 are disposed. Since the mechanical room 100b is not affected by the outdoor unit fan 124, an air flow in the mechanical room 100b may be relatively inactive. The pump 40 may be disposed between the water pipe 320 and the first outdoor heat exchanger 30. The pump 40 may be disposed to face the water pipe 320.

During the heating operation of the air conditioner 1, the first outdoor heat exchanger 30 may serve as a condenser, and the second outdoor heat exchanger 70 may serve as an evaporator. During the heating operation, the air conditioner 1 may operate in an injection cycle.

Hereunder, operations in a cooling cycle including the injection cycle are described. For convenience of description, the first outdoor heat exchanger 30 is referred to as "condenser 30", and the second outdoor heat exchanger 70 is referred to as "evaporator 70".

Referring to the drawings, the air conditioner 1 may include a compressor 10, a four-way valve 20, a condenser 30, a pump 40, a main expansion valve 51, an injection expansion value 52, an inner heat exchanger 60, an evaporator 70, an accumulator 80 and a micom 110.

The micom 110 may be a component that controls driving of the compressor 10 and controls opening and an opening degree of the main expansion valve 51 and the injection expansion valve 52. The micom 110 may correspond to a controller and denote a processor-based device. The processor may include one or more of a central processing unit, an application processor or a communication processor.

Hereunder, the cooling cycle of the air conditioner 1 is described.

The compressor 10 compresses refrigerants. In this case, the compressor 10 may compress refrigerants in multiple stages. In an example, the compressor 10 may include first and second compression rooms 11, 12. Refrigerants are compressed in the first compression room 11, and the refrigerants compressed in the first compression room 11 are compressed again in the second compression room 12. The driving of the compressor 10 may be controlled by the micom 110. In an example, the micom 110 may adjust a driving frequency of the compressor 10.

The refrigerants compressed in the compressor 10 may flow to the condenser 30 through the four-way valve 20.

The condenser 30 may condense the refrigerants compressed. That is, the condenser 30 may allow of heat exchange between the refrigerants compressed and water. In this case, first and second temperature sensors 21, 22 may be installed to sense a temperature of refrigerants flowing to the condenser 30. The first temperature sensor 21 may sense a temperature of refrigerants flowing to a pipe disposed in the condenser 30. That is, the first temperature sensor 21 may sense a temperature of refrigerants flowing into the condenser 30. The second temperature sensor 22 may sense a temperature of refrigerants discharged from the condenser 30, i.e., a temperature of refrigerants flowing to an outlet of the condenser 30. The temperatures sensed by the first and second temperature sensors 21, 22 may be transmitted to the micom 110.

The main expansion valve 51 may expand the refrigerants compressed in the condenser 30. That is, the main expansion valve 51 may throttle the refrigerants discharged from the condenser 30. The main expansion value 51 may be an electronic expansion valve and may be controlled by the micom 110. In an example, the micom 110 may open or close the main expansion valve 51, and adjust an opening degree of the main expansion valve 51 at a time when the main expansion valve 51 is opened.

Some of the refrigerants discharged from the main expansion valve 51 may be supplied to a first side of the inner heat exchanger 60, and the remaining refrigerants discharged from the main expansion valve 51 may be supplied to the injection expansion valve 52. For convenience of description, the some of the refrigerants are referred to as "main refrigerant", and the remaining refrigerants are referred to as "branch refrigerant".

In other words, a part or a portion e.g. a first part or first portion or a main part or main portion of the refrigerant discharged from the main expansion valve 51 may be supplied, for example directly supplied i.e. supplied bypassing the injection expansion valve, to the inner heat exchanger 60, and another part or portion (e.g. remaining part or a portion) e.g. a second part or second portion or a branched part or branched portion of the refrigerant discharged from the main expansion valve 51 may be supplied to the injection expansion valve 52 and then to the inner heat exchanger 60. Thus, "main refrigerant" may be understood as the main part or main portion of the refrigerant, and the "branch refrigerant", may also be referred to as "branched refrigerant" may be understood as the branched part or branched portion of the refrigerant.

That is, the main refrigerants of the refrigerants discharged from the main expansion valve 51 may flow into the first side of the inner heat exchanger 60 and flow out of a second side of the inner heat exchanger 60. The branch refrigerants of the refrigerants discharged from the main expansion valve 51 may be supplied to the injection expansion valve 52.

The air conditioner 1 may include an injection cannel 91, 92 that bypasses the branch refrigerants of the refrigerants discharged from the main expansion valve 51 and supplies the same to the compressor 10. That is, the injection flow path 91, 92 may be defined as a flow path that is branched from an outlet side of the main expansion valve 51 to the compressor 10 through the inner heat exchanger 60 and the injection expansion valve 52.

The injection expansion valve 52 may be installed in a first injection flow path 91 and expand the branch refrigerants. That is, the injection expansion valve 52 may throttle the branch refrigerants. The injection expansion valve 52 may be an electronic expansion valve and controlled by the micom 110. In an example, the micom 110 may open or close the injection expansion valve 52 and adjust an opening degree of the injection expansion valve 52 at a time when the injection expansion valve 52 is opened.

The branch refrigerants expanded in the injection expansion valve 52 may flow into a third side of the inner heat exchanger 60 and flow out of a fourth side of the inner heat exchanger 160.

The inner heat exchanger 60 may allow heat exchange between the main refrigerants and the branch refrigerants expanded in the injection expansion valve 52. In this case, since the branch refrigerants are expanded by the injection expansion valve 52, a temperature and pressure of the branch refrigerants may be lower than those of the main refrigerants. Accordingly, in the inner heat exchanger 60, the temperature of the branch refrigerants increases and the temperature of the main refrigerants may decrease. The inner heat exchanger 60 may be referred to as a supercooling device of the main refrigerants.

The main refrigerants heat-exchanged in the inner heat exchanger 60 may be discharged out of the second side of the inner heat exchanger 60 and then supplied to the evaporator 70. Additionally, the branch refrigerants heat-exchanged in the inner heat exchanger 60 may be discharged out of the fourth side of the inner heat exchanger 60 and then supplied to the compressor 10.

Third and fourth temperature sensors 93, 94 for sensing a temperature of the branch refrigerants may be installed in the injection flow path 91, 92. The third temperature sensor 93 may sense a temperature of the branch refrigerants flowing into the inner heat exchanger 60, i.e., a temperature of the third side of the inner heat exchanger 60. The fourth temperature sensor 94 may sense a temperature of the branch refrigerants discharged to the inner heat exchanger 60, i.e., a temperature of the fourth side of the inner heat exchanger 60. The temperatures sensed by the third and fourth temperature sensors 93, 94 may be transmitted to the micom 110.

The evaporator 70 may evaporate the main refrigerants heat-exchanged in the inner heat exchanger 60. That is, the evaporator 70 may allow of heat exchange between the main refrigerants and air.

The compressor 10 may compress the main refrigerants discharged out of the evaporator 70 and the branch refrigerants discharged out of the fourth side of the inner heat exchanger 60. As described above, the branch refrigerants discharged out of the fourth side of the inner heat exchanger 60 may be delivered to the injection flow path 91, 92 and injected between the first and second compression rooms 11, 12. The branch refrigerants may be introduced into the second compression room 12 and then compressed in a state of being mixed with the main refrigerants compressed in the first compression room 11.

As a result of repetition of the above procedures, the cooling cycle and the injection cycle may be completed while refrigerants are circulating.

A PH diagram of refrigerants circulating in the air conditioner 1 is described with reference to FIG. 6.

A state of the main refrigerants flowing into the compressor 10 corresponds to state A in FIG. 6. The main refrigerants flowing into the compressor 10 may be primarily compressed in the first compression room 11 of the compressor 10, and mixed with the branch refrigerants injected through the injection flow path 91, 92. A state of the mixed refrigerants corresponds to state B in FIG. 6.

The mixed refrigerants may be secondarily compressed in the second compression room 12. A state of the secondarily compressed refrigerants corresponds to state C in FIG. 6. The refrigerants discharged from the compressor 10 may flow into the condenser 30 and then condensed. A state of the refrigerants condensed in the condenser 30 corresponds to sate D in FIG. 6.

The refrigerants discharged from the condenser 30 may expand in the main expansion valve 51, and the branch refrigerants among the refrigerants discharged from the main expansion valve 51 may expand in the injection expansion valve 52. A state of the branch refrigerants discharged from the injection expansion valve 52 corresponds to state E in FIG. 6.

The main refrigerants and the branch refrigerants may exchange heat in the inner heat exchanger 60. A state of the main refrigerants discharged from the inner heat exchanger 60 corresponds to state F in FIG. 6. A state of the branch refrigerants discharged from the inner heat exchanger 60 corresponds to state G in FIG. 6.

As described above, a sufficient amount of refrigerants flowing through the condenser 30 may be obtained based on the injection cycle. During the heating operation, refrigerants on the inner heat exchanger side may be sufficiently obtained, and high-pressure refrigerants may flow into the compressor 10. Accordingly, operational loads may decrease, and efficiency of the cooling cycle may improve.

As a result of adjustment of an opening degree of the injection expansion valve 52, a flow rate of the branch refrigerants flowing in the injection flow path 91, 92 may be adjusted. However, an amount of the branch refrigerants injected may not be adjusted depending on an external environment or an operation state of an air conditioner. In an example, when an operation frequency of the compressor 10 is low, a temperature of inlet water is high, and an outdoor temperature is low, a sufficient amount of the branch refrigerants flowing in the injection flow path 91, 92 may not be obtained although the injection expansion valve 52 is completely open. In this case, a temperature of the refrigerants discharged from the compressor 10 may not decrease, and the air conditioner 1 may be turned off and then turned on.

Hereunder, a control method of an air conditioner 1 provided to solve the above problems is described.

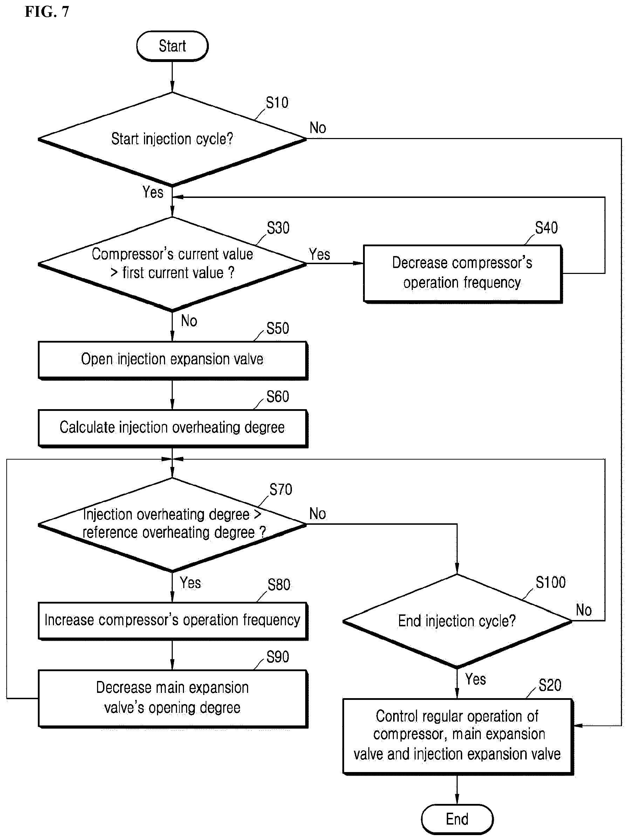

FIG. 7 is a flow chart showing a control method of an air conditioner 1 in one embodiment.

Herein, the air conditioner 1 is operating in a cooling cycle, the compressor 10 is driven and the injection expansion valve 52 is closed.

Hereunder, each step of the control method is described.

In step 10 (S10), the micom 110 may determine whether to start an injection cycle.

In an example, when an outdoor temperature is less than a predetermined temperature during the heating operation of the air conditioner 1, the micom 110 may determine that the injection cycle needs to start.

When the micom 110 ascertains that the injection cycle is not started, step 20 (S20) may be performed. That is, when the injection cycle is not requested, step 20 (S20) may be performed. In step 20 (S20), the injection cycle is not performed and the micom 110 may control the compressor 10, the main expansion valve 51 and the injection expansion valve 52 to operate regularly. That is, the micom 110 may control the air conditioner 1 such that the air conditioner 1 operates in an ordinary cooling cycle.

When the micom 110 ascertains that the injection cycle needs to start, step 30 (S30) may be performed. In step 30 (S30), the micom 110 may determine whether a current value of the compressor 10 is greater than a first predetermined current value.

The first current value may be a current value in relation to an operation frequency of the compressor 10, and may be set based on a specification of the compressor 10, the sort of a driving circuit of the compressor 10 and the like. Additionally, current of the compressor 10 may be input current of the compressor 10 or phase current of the compressor 10. In an example, the first current value may be a current value corresponding to the compressor's 10 first operation frequency for allowing the compressor 10 to operate reliably.

When the current value of the compressor 10 is greater than the first current value, step 40 (S40) may be performed. When the current value of the compressor 10 is less than or the same as the first current value, step 50 (S50) may be performed.

In step 40 (S40), the micom 110 may reduce the operation frequency of the compressor 10. Then the micom 110 may perform step 30 (S30) again. That is, step 30 (S30) and step 40 (S40) may be repeated until the current value of the compressor 10 is less than or the same as the first current value. Accordingly, when the current value of the compressor 10 is less than or the same as the first current value, step 50 (S50) may be performed.

Step 30 (S30) and step 40 (S40) may be performed to allow the compressor 10 to be driven reliably. Specifically, when the operation frequency of the compressor 10 is too high in the state in which the micom 110 ascertains that the injection cycle needs to start, current of the compressor 10 become unreliable. Thus, liquid-phase refrigerants may be discharged from the compressor 10 and introduced into the condenser 30. To prevent this from happening, the micom 110 may control the air conditioner 1 such that the operation frequency of the compressor 10 decreases to a certain level and then the injection cycle starts through step 30 (S30) and step 40 (S40).

From the compressor's 10 operation frequency perspective, step 30 (S30) and step 40 (S40) may be described as follows. The micom 110 may compare the operation frequency of the compressor 10 with a first predetermined operation frequency. In this case, the first operation frequency may be an operation frequency for allowing the compressor 10 to operate reliably in the injection cycle. In an example, the first operation frequency may be a predetermined operation frequency for starting the compressor 10.

If the operation frequency of the compressor 10 is greater than the first operation frequency, the micom 110 may reduce the operation frequency of the compressor 10 until the operation frequency of the compressor 10 is less than or the same as the first operation frequency. When the operation frequency of the compressor 10 is less than or the same as the first operation frequency, step 50 (S50) may be performed.

In the cooling cycle, the higher the operation frequency of the compressor 10 is, the higher the current of the compressor 10 is, and the lower the operation frequency of the compressor 10 is, the lower the current of the compressor 10 is. However, although the operation frequency of the compressor 10 is low, the current of the compressor 10 may be high since the AWHP air conditioner changes a state of refrigerants using water and maintains a temperature of water in the storage tank (not illustrated). Accordingly, to ascertain a driving state of the compressor 10 more accurately, the micom 110 may use a current value of the compressor 10 rather than an operation frequency of the compressor 10.

In step 50 (S50), the micom 110 may open the injection expansion valve 52. Accordingly, the injection cycle may start, and the branch refrigerants may flow to the injection flow path 91, 92 through the injection expansion valve 52. In step 50 (S50), the compressor 10 may be driven at the operation frequency determined in step 40 (S40), and the main expansion valve 51 and the injection expansion valve 52 may operate regularly.

In step 60 (S60), the micom 110 may calculate an injection superheating degree.

Herein, the injection superheating degree may be defined as a difference between temperatures of the branch refrigerants flowing to the injection flow path 91, 92 at certain points. The certain points may be the third side and the fourth side of the inner heat exchanger 60. In other words, the injection superheating degree may correspond to an superheating degree of the branch refrigerants. The superheating degree of the branch refrigerants may be defined as a difference between a temperature of the branch refrigerants discharged from the inner heat exchanger 60 and a temperature of the branch refrigerants flowing into the inner heat exchanger 60. The temperature of the branch refrigerants discharged from the inner heat exchanger 60 may correspond to a temperature of the branch refrigerants on the fourth side of the inner heat exchanger 60, and the temperature of the branch refrigerants flowing into the inner heat exchanger 60 may correspond to a temperature of the branch refrigerants on the third side of the inner heat exchanger 60.

As described above, the temperature of the branch refrigerants flowing into the inner heat exchanger 60 may be sensed by the third temperature sensor 93 and transmitted to the micom 110, and the temperature of the branch refrigerants discharged from the inner heat exchanger 60 may be sensed by the fourth temperature sensor 94 and transmitted to the micom 110.

The injection superheating degree may relate to a flow rate of the branch refrigerants flowing to the injection flow path 91, 92.

When the injection superheating degree is low, a sufficient amount of the branch refrigerants may flow to the injection flow path 91, 92, and a sufficient amount of the branch refrigerants may be injected into the compressor 10. Accordingly, the injection cycle may be effectively completed.

When the injection superheating degree is high, a sufficient amount of the branch refrigerants may not flow to the injection flow path 91, 92, and a sufficient amount of the branch refrigerants may not be injected into the compressor 10. Accordingly, the injection cycle may not be effectively completed. Thus, a temperature of the refrigerants discharged from the compressor 10 may not decrease, and the air conditioner 1 may be turned off and then turned on.

In step 70 (S70), the micom 110 may determine whether the injection superheating degree is greater than a predetermined reference superheating degree. That is, step 70 (S70) may correspond to a step of determining whether the flow rate of the branch refrigerants flowing to the injection flow path 91, 92 is less than a first predetermined flow rate.

The reference superheating degree may be a value experimentally determined. In an example, the reference superheating degree may be set to 2 °C but not limited.

The superheating degree of the branch refrigerants (i.e., the injection superheating degree) and the flow rate of the branch refrigerants may correspond to state information of the branch refrigerants flowing to the injection flow path 91, 92. Accordingly, step 70 (S70) may correspond to a step of ascertaining state information of the branch refrigerants flowing to the injection flow path 91, 92.

When the injection superheating degree is greater than the reference superheating degree in step 70 (S70), step 80 (S80) and step 90 (S90) may be performed. That is, when the flow rate of the branch refrigerants is less than the first discharged rate, step 80 (S80) and step 90 (S90) may be performed. When the injection superheating degree is greater than the reference superheating degree in step 70 (S70), step 100 (S100) may be performed.

Step 80 (S80) and step 90 (S90) may correspond to a step of obtaining a sufficient amount of the branch refrigerants flowing to the injection flow path 91, 92. Since a flow rate of the branch refrigerants is ensured in step 80 (S80) and step 90 (S90), the injection cycle may be smoothly completed. When the injection superheating degree is less than or the same as the reference superheating degree as result of repetition of step (S80) and step 90 (S90), step 100 (S100) may be performed.

In step 80 (S80), the micom 110 may increase the operation frequency of the compressor 10.

That is, when the operation frequency of the compressor 10 increases in the injection cycle, the number of rotations of the compressor 10 may increase, and the compression volume of the compressor 10 may increase, resulting in an increase in the flow rate of the refrigerants. Thus, the flow rate of the branch refrigerants flowing to the injection flow path 91, 92 may increase, and an adequate flow rate of the branch refrigerants may be ensured in the injection cycle.

Specifically, when the injection superheating degree is high, there is a big difference between the temperature of the branch refrigerants discharged from the inner heat exchanger 60 and the temperature of the branch refrigerants flowing into the inner heat exchanger 60, and the flow rate of the branch refrigerants may decrease. Accordingly, to ensure an adequate flow rate of the branch refrigerants, the micom 110 may increase the operation frequency of the compressor 10 in proportion to the injection superheating degree.

In step 90 (S90), the micom 110 may decrease an opening degree of the main expansion valve 51. In this case, the micom 110 may decrease the opening degree of the main expansion valve 51 in proportion to a supercooling degree of the refrigerants discharged from the condenser 30.

The supercooling degree of the refrigerants may be defined as a difference in temperatures of the refrigerants flowing to the condenser 30 at certain points. Herein, the certain points may be a point of a pipe in the condenser 30 and a point of a pipe on an outlet side of the condenser 30. In other words, the supercooling degree of the refrigerants may correspond to a difference between a temperature of the refrigerants flowing into the condenser 30 and a temperature of the refrigerants discharged from the condenser 30. The temperature of the refrigerants flowing into the condenser 30 may correspond to an intermediate temperature of the refrigerants flowing to the condenser 30.

As described above, the temperature of the refrigerants flowing into the condenser 30 may be sensed by the first temperature sensor 21 and transmitted to the micom 110, and the temperature of the refrigerants discharged from the condenser 30 may be sensed by the second temperature sensor 22 and transmitted to the micom 110.

When the refrigerants discharged from the condenser 30 are supercooled in the injection cycle, expansion efficiency of the main expansion valve 51 may deteriorate. Accordingly, a sufficient amount of the branch refrigerants may not be supplied to the injection flow path 91, 92, and efficiency of the cooling cycle may decrease. Accordingly, the micom 110 may decrease the opening degree of the main expansion valve 51 in proportion to the supercooling of the refrigerants discharged from/to the condenser 30. Thus, a sufficient amount of the branch refrigerants may be supplied to the injection flow path 91, 92.

The order of performing step 80 (S80) and step 90 (S90) is not limited to the order in FIG. 7. That is, in FIG. 7, step 80 (S80) is performed and then step 90 (S90) is performed. However, step 90 (S90) may be performed before step 80 (S80).

Additionally, in FIG. 7, step 80 (S80) and step 90 (S90) are all performed. However, in another example, any one of step 80 (S80) and step 90 (S90) may only be performed. That is, when step 80 (S80) is performed, step 90 (S90) may be omitted, and when step 90 (S90) is performed, step 80 (S80) may be omitted. To ensure an adequate flow rate of the branch refrigerants, step 80 (S80) and step 90 (S90) may all be performed, for example.

When a sufficient amount of the branch refrigerants flowing to the injection flow path 91, 92 is obtained as a result of performance of step 80 (S80) and step 90 (S90) one or more times, the micom 110 may determine whether the injection cycle ends, in step 100 (S100).

In an example, when an outdoor temperature increases during the heating operation of the air conditioner 1, the micom 110 may ascertain that the injection cycle ends.

When acertaining that the injection cycle does not end, the micom 110 may perform step 70 (S70) again.

When the micom 110 ascertains the end of the injection cycle, step 20 (S70) may be performed. Accordingly, the air conditioner 1 may be driven in an ordinary cooling cycle.

In summary, the air conditioner 1 in one embodiment may adjust at least one of the operation frequency of the compressor 10 and the opening degree of the main expansion valve 51 while operating in the injection cycle to obtain a sufficient amount of the branch refrigerants flowing to the injection flow path 91, 92. Accordingly, the refrigerants discharged from the compressor 10 may be prevented from superheating. Further, as a result of the control over the temperature of the refrigerants discharged from the compressor 10, an operational error of the air conditioner 1 may be prevented.

The air conditioner 1 in one embodiment may adjust the operation frequency of the compressor 10 to drive the compressor 10 reliably before starting the injection cycle. That is, when the operation frequency of the compressor 10 is too high before the injection cycle starts, the air conditioner 1 may control the compressor 10 such that the operation frequency of the compressor decreases to the first predetermined operation frequency or less.

## Claims

1. An air conditioner comprising:
a compressor (10), a condenser (30) and an evaporator (70);
a main expansion valve (51) configured to receive refrigerant discharged from the condenser (30) and to throttle the refrigerant;
an injection flow path (91, 92) configured to branch off a part of the refrigerant discharged from the main expansion valve (51) as branched refrigerant;
an injection expansion valve (52) installed in the injection flow path (91, 92), and configured to receive the branched refrigerant and to throttle the branched refrigerant;
an inner heat exchanger (60) configured to:
receive the branched refrigerant discharged from the injection expansion valve (52) through the injection flow path (91, 92),
receive a main refrigerant, bypassing the injection expansion valve (52), of the refrigerant discharged from the main expansion valve (51),
exchange heat between the branched refrigerant and the main refrigerant,
discharge the main refrigerant to the evaporator (70), and
discharge the branched refrigerant to the compressor (10) through the injection flow path (91, 92); and
a controller (110) configured to control the compressor (10), the main expansion valve (51) and the injection expansion valve (52);
wherein, in an injection cycle of the air conditioner, the controller (110) is configured to:
open the injection expansion valve (52), and
adjust an operation frequency of the compressor (10) and/or an opening degree of the main expansion valve (51), based on state information of the branched refrigerant flowing in the injection flow path (91, 92) through the injection expansion valve (52);
**characterized in that**
the controller (110) is configured to compare a current value of a current applied to the compressor (10) with a predetermined first current value, before the injection expansion valve (52) is open, and
wherein the controller (110) is configured to decrease the operation frequency of the compressor (10), when the current value of the compressor (10) is greater than the first current value

2. The air conditioner of claim 1, wherein the state information of the branched refrigerant comprises: information on an superheating degree of the branched refrigerant flowing in the injection flow path (91, 92).

3. The air conditioner of claim 2, further including temperature sensors (93, 94) configured to determine a temperature of the branched refrigerant discharged from the inner heat exchanger (60) and a temperature of the branched refrigerant flowing in the inner heat exchanger (60); and
wherein the information on the superheating degree of the branched refrigerant corresponds to a difference between the temperature of the branched refrigerant discharged from the inner heat exchanger (60) and the temperature of the branched refrigerant flowing in the inner heat exchanger (60).

4. The air conditioner of claim 2 or 3, wherein, the controller (110) is configured to increase the operation frequency of the compressor (10), based on the superheating degree of branched refrigerant being greater than a predetermined reference superheating degree.

5. The air conditioner of claim 4, wherein the controller (110) is configured to increase the operation frequency of the compressor (10) in proportion to the superheating degree of branched refrigerant.

6. The air conditioner of any one of claims 2 to 5, wherein the controller (110) is configured to decrease the opening degree of the main expansion valve (51), when the superheating degree of the branched refrigerant is greater than a predetermined reference superheating degree.

7. The air conditioner of claim 6, wherein the controller (110) is configured to decrease the opening degree of the main expansion valve (51) in proportion to a supercooling degree of refrigerant discharged from the condenser (30).

8. The air conditioner of claim 7, wherein the supercooling degree of refrigerant corresponds to a difference between a temperature of the refrigerant flowing in or into the condenser (30) and a temperature of refrigerant discharged from the condenser (30).

9. The air conditioner of any one of the preceding claims, wherein the state information of the branched refrigerant comprises a flow rate of the branched refrigerant flowing in the injection flow path (91, 92).

10. The air conditioner of any one of the preceding claims, wherein the controller (110) is configured to decrease the operation frequency of the compressor (10) until the current value of the compressor (10) is the same as or less than the first current value.

11. The air conditioner of any one of the preceding claims, wherein the controller (110) is configured to compare an operation frequency of the compressor (10) with a predetermined first operation frequency, before the injection expansion valve (52) is open, and
wherein the controller (110) is configured to decrease the operation frequency of the compressor (10), when the operation frequency of the compressor (10) is greater than the first operation frequency.

12. A control method for an air conditioner comprising a compressor (10), a condenser (30), a main expansion valve (51), an injection flow path (91, 92), an injection expansion valve (52) installed in the injection flow path (91, 92), an inner heat exchanger (60), an evaporator (70) and a controller (110), the control method comprising;
opening (S50) the injection expansion valve (52); and
adjusting (S40, S80, S90) an operation frequency of the compressor (10) and/or an opening degree of the main expansion valve (51), based on state information of branched refrigerant flowing in the injection flow path (91, 92) through the injection expansion valve (52);
**characterized in that** wherein the control method comprises:
comparing, by the controller (110), a current value of a current applied to the compressor (10) with a predetermined first current value, before the injection expansion valve (52) is open; and
decreasing, by the controller (110), the operation frequency of the compressor (10), when the current value of the compressor (10) is greater than the first current value.

13. The control method of claim 12, wherein the state information of the branched refrigerant comprises: information on an superheating degree of the branched refrigerant flowing in the injection flow path (91, 92), and
wherein adjusting the operation frequency of the compressor (10) and/or an opening degree of the main expansion valve (51) comprises: increasing the operation frequency of the compressor (10) in proportion to the superheating degree of the branched refrigerant, when the superheating degree of branched refrigerant exceeds a predetermined reference superheating degree.

14. The control method of claim 12 or 13, wherein the state information of the branched refrigerant comprises: information on an superheating degree of the branched refrigerant flowing in the injection flow path (91, 92), and
wherein adjusting the operation frequency of the compressor (10) and/or an opening degree of the main expansion valve (51) comprises: decreasing an opening degree of the main expansion valve (51) in proportion to a supercooling degree of refrigerant discharged from the condenser (30), when the superheating degree of branched refrigerant exceeds a predetermined reference superheating degree.

## Patentansprüche

1. Klimaanlage, die Folgendes umfasst:
einen Kompressor (10), einen Kondensator (30) und einen Verdampfer (70);
ein Hauptexpansionsventil (51), das konfiguriert ist, ein Kältemittel aufzunehmen, das vom Kondensator (30) abgegeben wird, und das Kältemittel zu drosseln;
einen Injektionsströmungsweg (91, 92), der konfiguriert ist, einen Teil des Kältemittels, das vom Hauptexpansionsventil (51) abgegeben wird, als abgezweigtes Kältemittel abzuzweigen;
ein Injektionsexpansionsventil (52), das im Injektionsströmungsweg (91, 92) installiert ist und konfiguriert ist, das abgezweigte Kältemittel aufzunehmen und das abgezweigte Kältemittel zu drosseln;
einen Innenwärmetauscher (60), der konfiguriert ist zum:
Aufnehmen des abgezweigten Kältemittels, das vom Injektionsexpansionsventil (52) abgegeben wird, über den Injektionsströmungsweg (91, 92),
Aufnehmen eines Hauptkältemittels unter Umgehung des Injektionsexpansionsventils (52) des Kältemittels, das vom Hauptexpansionsventil (51) abgegeben wird,
Austauschen von Wärme zwischen dem abgezweigten Kältemittel und dem Hauptkältemittel,
Abgeben des Hauptkältemittels zum Verdampfer (70) und
Abgeben des abgezweigten Kältemittels zum Kompressor (10) über den Injektionsströmungsweg (91, 92); und
eine Steuereinheit (110), die konfiguriert ist, den Kompressor (10), das Hauptexpansionsventil (51) und das Injektionsexpansionsventil (52) zu steuern;
wobei in einem Injektionszyklus der Klimaanlage die Steuereinheit (110) konfiguriert ist zum:
Öffnen des Injektionsexpansionsventils (52) und
Einstellen einer Betriebsfrequenz des Kompressors (10) und/oder eines Öffnungsgrads des Hauptexpansionsventils (51) auf der Grundlage von Zustandsinformationen des abgezweigten Kältemittels, das durch das Injektionsexpansionsventil (52) in den Injektionsströmungsweg (91, 92) strömt;
**dadurch gekennzeichnet, dass** die Steuereinheit (110) konfiguriert ist, einen Stromwert eines Stroms, der in den Kompressor (10) eingegeben wird, mit einem vorgegebenen ersten Stromwert zu vergleichen, bevor das Injektionsexpansionsventil (52) offen ist, wobei
die Steuereinheit (110) konfiguriert ist, die Betriebsfrequenz des Kompressors (10) zu verringern, wenn der Stromwert des Kompressors (10) größer als der erste Stromwert ist.

2. Klimaanlage nach Anspruch 1, wobei die Zustandsinformationen des abgezweigten Kältemittels Folgendes umfassen: Informationen über einen Überhitzungsgrad des abgezweigten Kältemittels, das in den Injektionsströmungsweg (91, 92) strömt.

3. Klimaanlage nach Anspruch 2, die ferner Temperatursensoren (93, 94) enthält, die konfiguriert sind, eine Temperatur des abgezweigten Kältemittels, das vom Innenwärmetauscher (60) abgegeben wird, und eine Temperatur des abgezweigten Kältemittels, das in den Innenwärmetauscher (60) strömt, zu bestimmen;
wobei die Informationen über den Überhitzungsgrad des abgezweigten Kältemittels einer Differenz zwischen der Temperatur des abgezweigten Kältemittels, das vom Innenwärmetauscher (60) abgegeben wird, und der Temperatur des abgezweigten Kältemittels, das in den Innenwärmetauscher (60) strömt, entsprechen.

4. Klimaanlage nach Anspruch 2 oder 3, wobei die Steuereinheit (110) konfiguriert ist, die Betriebsfrequenz des Kompressors (10) auf der Grundlage davon zu erhöhen, dass der Überhitzungsgrad des abgezweigten Kältemittels größer als ein vorgegebener Bezugsüberhitzungsgrad ist.

5. Klimaanlage nach Anspruch 4, wobei die Steuereinheit (110) konfiguriert ist, die Betriebsfrequenz des Kompressors (10) im Verhältnis zum Überhitzungsgrad des abgezweigten Kältemittels zu erhöhen.

6. Klimaanlage nach einem der Ansprüche 2 bis 5, wobei die Steuereinheit (110) konfiguriert ist, den Öffnungsgrad des Hauptexpansionsventils (51) zu verringern, wenn der Überhitzungsgrad des abgezweigten Kältemittels größer als ein vorgegebener Bezugsüberhitzungsgrad ist.

7. Klimaanlage nach Anspruch 6, wobei die Steuereinheit (110) konfiguriert ist, den Öffnungsgrad des Hauptexpansionsventils (51) im Verhältnis zu einem Unterkühlungsgrad des Kältemittels, das vom Kondensator (30) abgegeben wird, zu verringern.

8. Klimaanlage nach Anspruch 7, wobei der Unterkühlungsgrad des Kältemittels einer Differenz zwischen einer Temperatur des Kältemittels, das in dem oder in den Kondensator (30) strömt, und einer Temperatur eines Kältemittels, das vom Kondensator (30) abgegeben wird, entspricht.

9. Klimaanlage nach einem der vorhergehenden Ansprüche, wobei die Zustandsinformationen des abgezweigten Kältemittels eine Durchflussmenge des abgezweigten Kältemittels, das in den Injektionsströmungsweg (91, 92) strömt, umfassen.

10. Klimaanlage nach einem der vorhergehenden Ansprüche, wobei die Steuereinheit (110) konfiguriert ist, die Betriebsfrequenz des Kompressors (10) zu verringern, bis der Stromwert des Kompressors (10) gleich oder kleiner als der erste Stromwert ist.

11. Klimaanlage nach einem der vorhergehenden Ansprüche, wobei die Steuereinheit (110) konfiguriert ist, eine Betriebsfrequenz des Kompressors (10) mit einer vorgegebenen ersten Betriebsfrequenz zu vergleichen, bevor das Injektionsexpansionsventil (52) offen ist, und
wobei die Steuereinheit (110) konfiguriert ist, die Betriebsfrequenz des Kompressors (10) zu verringern, wenn die Betriebsfrequenz des Kompressors (10) größer als die erste Betriebsfrequenz ist.

12. Steuerverfahren für eine Klimaanlage, die einen Kompressor (10), einen Kondensator (30), ein Hauptexpansionsventil (51), einen Injektionsströmungsweg (91, 92), ein Injektionsexpansionsventil (52), das im Injektionsströmungsweg (91, 92) installiert ist, einen Innenwärmetauscher (60), einen Verdampfer (70) und eine Steuereinheit (110) umfasst, wobei das Steuerverfahren Folgendes umfasst:
Öffnen (S50) des Injektionsexpansionsventils (52) und
Einstellen (S40, S80, S90) einer Betriebsfrequenz des Kompressors (10) und/oder eines Öffnungsgrads des Hauptexpansionsventils (51) auf der Grundlage von Zustandsinformationen eines abgezweigten Kältemittels, das in den Injektionsströmungsweg (91, 92) durch das Injektionsexpansionsventil (52) einströmt;
**dadurch gekennzeichnet, dass** das Steuerverfahren Folgendes umfasst:
Vergleichen durch die Steuereinheit (110) eines Stromwerts eines Stroms, der in den Kompressor (10) eingegeben wird, mit einem vorgegebenen ersten Stromwert, bevor das Injektionsexpansionsventil (52) offen ist; und
Verringern durch die Steuereinheit (110) der Betriebsfrequenz des Kompressors (10), wenn der Stromwert des Kompressors (10) größer als der erste Stromwert ist.

13. Steuerverfahren nach Anspruch 12, wobei die Zustandsinformationen des abgezweigten Kältemittels Folgendes umfassen: Informationen über einen Überhitzungsgrad des abgezweigten Kältemittels, das in den Injektionsströmungsweg (91, 92) strömt,
wobei das Einstellen der Betriebsfrequenz des Kompressors (10) und/oder eines Öffnungsgrads des Hauptexpansionsventils (51) Folgendes umfasst: Erhöhen der Betriebsfrequenz des Kompressors (10) im Verhältnis zum Überhitzungsgrad des abgezweigten Kältemittels, wenn der Überhitzungsgrad des abgezweigten Kältemittels einen vorgegebenen Bezugsüberhitzungsgrad überschreitet.

14. Steuerverfahren nach Anspruch 12 oder 13, wobei die Zustandsinformationen des abgezweigten Kältemittels Folgendes umfassen: Informationen über einen Überhitzungsgrad des abgezweigten Kältemittels, das in den Injektionsströmungsweg (91, 92) strömt,
wobei das Einstellen der Betriebsfrequenz des Kompressors (10) und/oder eines Öffnungsgrads des Hauptexpansionsventils (51) Folgendes umfasst: Verringern eines Öffnungsgrads des Hauptexpansionsventils (51) im Verhältnis zu einem Unterkühlungsgrad des Kältemittels, das vom Kondensator (30) abgegeben wird, wenn der Überhitzungsgrad des abgezweigten Kältemittels einen vorgegebenen Bezugsüberhitzungsgrad überschreitet.

## Revendications

1. Climatiseur comportant :
un compresseur (10), un condenseur (30) et un évaporateur (70) ;
une soupape de détente principale (51) configurée pour recevoir du fluide frigorigène évacué du condenseur (30) et pour étrangler le fluide frigorigène ;
un trajet d'écoulement pour l'injection (91, 92) configuré pour faire bifurquer une partie du fluide frigorigène évacué de la soupape de détente principale (51) en tant que fluide frigorigène ayant bifurqué ;
une soupape de détente d'injection (52) installée dans le trajet d'écoulement pour l'injection (91, 92) et configurée pour recevoir le fluide frigorigène ayant bifurqué et pour étrangler le fluide frigorigène ayant bifurqué ;
un échangeur de chaleur interne (60) configuré pour :
recevoir le fluide frigorigène ayant bifurqué évacué de la soupape de détente d'injection (52) par le trajet d'écoulement pour l'injection (91, 92),
recevoir un fluide frigorigène principal, contournant la soupape de détente d'injection (52), du fluide frigorigène évacué de la soupape de détente principale (51),
échanger de la chaleur entre le fluide frigorigène ayant bifurqué et le fluide frigorigène principal,
évacuer le fluide frigorigène principal vers l'évaporateur (70), et
évacuer le fluide frigorigène ayant bifurqué vers le compresseur (10) par le trajet d'écoulement pour l'injection (91, 92) ; et
une commande (110) configurée pour commander le compresseur (10), la soupape de détente principale (51) et la soupape de détente d'injection (52) ;
dans lequel, dans un cycle d'injection du climatiseur, la commande (110) est configurée pour :
ouvrir la soupape de détente d'injection (52), et
régler une fréquence de fonctionnement du compresseur (10) et/ou un degré d'ouverture de la soupape de détente principale (51), sur la base d'informations d'état du fluide frigorigène ayant bifurqué s'écoulant dans le trajet d'écoulement pour l'injection (91, 92) à travers la soupape de détente d'injection (52) ;
**caractérisé en ce que** la commande (110) est configurée pour comparer une valeur de courant d'un courant appliqué au compresseur (10) avec une première valeur de courant prédéterminée, avant l'ouverture de la soupape de détente d'injection (52), et
dans lequel la commande (110) est configurée pour réduire la fréquence de fonctionnement du compresseur (10), lorsque la valeur de courant du compresseur (10) est supérieure à la première valeur de courant.

2. Climatiseur selon la revendication 1, dans lequel les informations d'état du fluide frigorigène ayant bifurqué comportent des informations sur un degré de surchauffe du fluide frigorigène ayant bifurqué s'écoulant dans le trajet d'écoulement pour l'injection (91, 92).

3. Climatiseur selon la revendication 2, comportant en outre des capteurs de température (93, 94) configurés pour déterminer une température du fluide frigorigène ayant bifurqué évacué de l'échangeur de chaleur intérieur (60) et une température du fluide frigorigène ayant bifurqué s'écoulant dans l'échangeur de chaleur intérieur (60) ; et
dans lequel les informations sur le degré de surchauffe du fluide frigorigène ayant bifurqué correspondent à une différence entre la température du fluide frigorigène ayant bifurqué évacué de l'échangeur de chaleur interne (60) et la température du fluide frigorigène ayant bifurqué s'écoulant dans l'échangeur de chaleur interne (60).

4. Climatiseur selon la revendication 2 ou 3, dans lequel la commande (110) est configurée pour augmenter la fréquence de fonctionnement du compresseur (10), sur la base du fait que le degré de surchauffe du fluide frigorigène ayant bifurqué est supérieur à un degré de surchauffe de référence prédéterminé.

5. Climatiseur selon la revendication 4, dans lequel la commande (110) est configurée pour augmenter la fréquence de fonctionnement du compresseur (10) proportionnellement au degré de surchauffe du fluide frigorigène ayant bifurqué.

6. Climatiseur selon l'une quelconque des revendications 2 à 5, dans lequel la commande (110) est configurée pour réduire le degré d'ouverture de la soupape de détente principale (51), lorsque le degré de surchauffe du fluide frigorigène ayant bifurqué est supérieur à un degré de surchauffe de référence prédéterminé.

7. Climatiseur selon la revendication 6, dans lequel la commande (110) est configurée pour réduire le degré d'ouverture de la soupape de détente principale (51) proportionnellement à un degré de sous-refroidissement du fluide frigorigène évacué du condenseur (30).

8. Climatiseur selon la revendication 7, dans lequel le degré de sous-refroidissement du fluide frigorigène correspond à une différence entre une température du fluide frigorigène s'écoulant à l'entrée ou dans le condenseur (30) et une température du fluide frigorigène évacué du condenseur (30).

9. Climatiseur selon l'une quelconque des revendications précédentes, dans lequel les informations d'état du fluide frigorigène ayant bifurqué comportent un débit du fluide frigorigène ayant bifurqué s'écoulant dans le trajet d'écoulement pour l'injection (91, 92).

10. Climatiseur selon l'une quelconque des revendications précédentes, dans lequel la commande (110) est configurée pour réduire la fréquence de fonctionnement du compresseur (10) jusqu'à ce que la valeur de courant du compresseur (10) soit égale ou inférieure à la première valeur de courant.

11. Climatiseur selon l'une quelconque des revendications précédentes, dans lequel la commande (110) est configurée pour comparer une fréquence de fonctionnement du compresseur (10) avec une première fréquence de fonctionnement prédéterminée, avant l'ouverture de la soupape de détente d'injection (52), et
dans lequel la commande (110) est configurée pour réduire la fréquence de fonctionnement du compresseur (10), lorsque la fréquence de fonctionnement du compresseur (10) est supérieure à la première fréquence de fonctionnement.

12. Procédé de commande pour un climatiseur comportant un compresseur (10), un condenseur (30), une soupape de détente principale (51), un trajet d'écoulement pour l'injection (91, 92), une soupape de détente d'injection (52) installé dans le trajet d'écoulement pour l'injection (91, 92), un échangeur de chaleur interne (60), un évaporateur (70) et une commande (110), le procédé de commande comportant les étapes consistant à :
ouvrir (S50) la soupape de détente d'injection (52) ; et
régler (S40, S80, S90) une fréquence de fonctionnement du compresseur (10) et/ou un degré d'ouverture de la soupape de détente principale (51), sur la base d'informations d'état du fluide frigorigène ayant bifurqué s'écoulant dans le trajet d'écoulement pour l'injection (91, 92) à travers la soupape de détente d'injection (52) ;
**caractérisé en ce que** le procédé de commande comporte les étapes consistant à :
comparer, par la commande (110), une valeur de courant d'un courant appliqué au compresseur (10) avec une première valeur de courant prédéterminée, avant l'ouverture de la soupape de détente d'injection (52) ; et
réduire, par la commande (110), la fréquence de fonctionnement du compresseur (10), lorsque la valeur de courant du compresseur (10) est supérieure à la première valeur de courant.

13. Procédé de commande selon la revendication 12, dans lequel les informations d'état du fluide frigorigène ayant bifurqué comportent des informations sur un degré de surchauffe du fluide frigorigène ayant bifurqué s'écoulant dans le trajet d'écoulement pour l'injection (91, 92), et
dans lequel le réglage de la fréquence de fonctionnement du compresseur (10) et/ou d'un degré d'ouverture de la soupape de détente principale (51) comporte l'augmentation de la fréquence de fonctionnement du compresseur (10) proportionnellement au degré de surchauffe du fluide frigorigène ayant bifurqué, lorsque le degré de surchauffe du fluide frigorigène ayant bifurqué dépasse un degré de surchauffe de référence prédéterminé.

14. Procédé de commande selon la revendication 12 ou 13, dans lequel les informations d'état du fluide frigorigène ayant bifurqué comportent des informations sur un degré de surchauffe du fluide frigorigène ayant bifurqué s'écoulant dans le trajet d'écoulement pour l'injection (91, 92), et
dans lequel le réglage de la fréquence de fonctionnement du compresseur (10) et/ou d'un degré d'ouverture de la soupape de détente principale (51) comporte la réduction d'un degré d'ouverture de la soupape de détente principale (51) proportionnellement à un degré de sous-refroidissement du fluide frigorigène évacué du condenseur (30), lorsque le degré de surchauffe du fluide frigorigène ayant bifurqué dépasse un degré de surchauffe de référence prédéterminé.
